(19) Europäisches Patentamt

European Patent Office

Office européen des brevets

(11) **EP 2 960 257 B1**

(12) **EUROPEAN PATENT SPECIFICATION**

(45) Date of publication and mention
of the grant of the patent:
**28.09.2022   Bulletin 2022/39**

(21) Application number: **14174694.1**

(22) Date of filing: **27.06.2014**

(51) International Patent Classification (IPC):
***C08F 4/654*** *(2006.01)*

(52) Cooperative Patent Classification (CPC):
(C-Sets available)
**C08F 110/06**                                    (Cont.)

(54) **Improved process for preparing a particulate olefin polymerisation catalyst component**

Verbessertes Verfahren zur Herstellung einer teilchenförmigen
Olefinpolymerisationskatalysatorkomponente

Procédé amélioré de préparation d'un composant de catalyseur de polymérisation d'oléfine particulaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015   Bulletin 2015/53**

(73) Proprietor: **Borealis AG
1020 Vienna (AT)**

(72) Inventors:
 • **Denifl, Peter
   00990 Helsinki (FI)**
 • **Rönkkö, Hanna-Leena
   06100 Porvoo (FI)**
 • **Leinonen, Timo
   06750 Tolkkinen (FI)**

(74) Representative: **Lux, Berthold
   Maiwald Patentanwalts- und
   Rechtsanwaltsgesellschaft mbH
   Elisenhof
   Elisenstraße 3
   80335 München (DE)**

(56) References cited:
   **EP-A1- 0 451 876        EP-A1- 1 061 088
   EP-A1- 2 415 790        EP-A1- 2 963 065
   JP-A- 2010 001 420        US-A- 5 489 634
   US-A1- 2005 176 900**

(52) Cooperative Patent Classification (CPC): (Cont.)

C-Sets
**C08F 110/06, C08F 4/651;**
**C08F 110/06, C08F 4/6546;**
C08F 110/06, C08F 2500/12

**Description**

The present invention relates to an improved process for the preparation of phthalate free particulate olefin polymerisation catalyst components, to the particulate olefin polymerisation catalyst component itself as well as to the use of said catalyst components for preparing a catalyst used in polymerisation processes.

**Background of the invention**

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or at least one internal donor compound. ZN catalyst may also comprise (b) further catalyst component(s), such as a cocatalyst and/or an external donor.

Various methods for preparing ZN catalysts are known in the state of art. In one known method, a supported ZN catalyst system is prepared by impregnating the catalyst components on a particulate support material. In WO 2001/55230, the catalyst component(s) are supported on a porous, inorganic or organic particulate carrier material, such as silica.

In a further well known method the carrier material is based on one of the catalyst components, e.g. on a magnesium compound, such as $MgCl_2$. This type of carrier material can also be formed in various ways. EP 713886 of Japan Olefins describes the formation of $MgCl_2$ adduct with an alcohol which is then emulsified and finally the resultant mixture is quenched to cause the solidification of the droplets.

Alternatively, EP 856013 of BP discloses the formation of a solid Mg-based carrier, wherein the Mg-component containing phase is dispersed to a continuous phase and the dispersed Mg-phase is solidified by adding the two-phase mixture to a liquid hydrocarbon.

The formed solid carrier particles are normally treated with a transition metal compound and optionally with other compounds for forming the active catalyst. Accordingly, in case of external carriers, some examples of which are disclosed above, the morphology of the carrier is one of the defining factors for the morphology of the final catalyst.

One disadvantage encountered with the supported catalyst systems is that distribution of the catalytically active compounds on the support material is highly dependent on the support particle structure, like compactness of the support particles, porosity and pore size distribution. As a result this may often lead to non-uniform distribution of the active component(s) within the catalyst particle. As a consequence of the uneven distribution of the active sites in catalyst particles catalysts with intra-particle in-homogeneities, as well interparticle in-homogeneities between separate particles are obtained, which leads finally to inhomogeneous polymer material. Further, support material will remain in the final polymer as a residue, which might be harmful in some polymer applications. In polymerisation process point of view such in-homogeneities tend to cause problems, like stickiness and agglomeration formation.

WO 2000/08073 and WO 2000/08074 describe further methods for producing a solid ZN catalyst, wherein a solution of an Mg-based compound and one or more further catalyst compounds are formed and the reaction product thereof is precipitated out of the solution by heating the system.

Furthermore, EP 926165 discloses another precipitating method, wherein a mixture of $MgCl_2$ and Mg-alkoxide is precipitated together with a Ti-compound to give a ZN catalyst.

EP 83074 and EP 83073 of Montedison disclose methods for producing a ZN catalyst or a precursor thereof, wherein an emulsion or dispersion of Mg and/or Ti compound is formed in an inert liquid medium or inert gas phase and said system is reacted with an Al-alkyl compound to precipitate a solid catalyst. According to examples said emulsion is then added to a larger volume of Al-compound in hexane and prepolymerised to cause the precipitation. In general, a drawback of such precipitation methods is the difficulty to control the precipitation step and thus the morphology of the precipitating catalyst particles. Furthermore, the precipitation of the catalyst component(s) results easily in formation of broad particle size distribution of catalyst particles comprising particles from very small particles to big agglomerates, and further to the loss of the morphology of the catalyst and formation of fines. In polymerisation process this causes in turn undesired and harmful disturbances, like plugging, formation of polymer layer on the walls of the reactor and in lines and in further equipments, like extruders, as well decreased flowability of polymer powder and other polymer handling problems.

According to US 2005/0176900 a magnesium compound, an alcohol, an ether, a surfactant and an alkyl silicate are reacted first to get a catalyst support, which is then further reacted with a titanium compound and consequently the solid titanium catalyst component is obtained via precipitation. The catalyst component further comprises an internal donor, which can be selected from a great variety of compounds.

WO 03/000757 as well WO 03/000754 describe a process for the preparation of an olefin polymerisation catalyst component, enabling to prepare solid particles of a catalyst component comprising a Group 2 metal together with a transition metal, however without using any external carrier material or without using conventional precipitation methods, but using so called emulsification-solidification method for producing solid catalyst particles. In the process a phthalate type internal electron donor is prepared in situ during the catalyst preparation, and chemicals are used so that an emulsion is formed. Droplets of the dispersed phase of the emulsion form the catalyst component, and solidifying the droplets results in solid particulate catalyst.

WO 2004/029112 discloses a further modification of the emulsion-solidification method as described in WO 03/000757 and WO 03/000754, and relates thus to a process for preparing an olefin polymerisation catalyst component, wherein the process is further characterized in that a specific aluminum alkyl compound is brought into contact with the catalyst component, enabling a certain degree of activity increase at higher temperatures.

A further aspect in recent catalyst development work is the desire to avoid as much as possible the use of substances which are considered as potential harmful compounds as regards to health and environmental aspects. One class of substances which has been considered as potential harmful compounds is phthalates, which have been commonly used as internal electron donors in Ziegler-Natta type catalysts. Although the amount of these phthalate compounds, used as internal electron donors in catalysts, in the final polymer is very small, it has been and is still desirable to find out alternative compounds to replace phthalate compounds and still get catalysts having good activity and excellent morphology resulting in the desired polymer properties as well as in a fluent polymerisation process.

Use of non-phthalate donors is as such not new in ZN catalysts. However, such donors are mainly used in catalysts, which are prepared by supporting the catalyst components on an external carrier. Drawbacks of such supported catalysts are described above.

Thus it has been highly appreciated to find out a way for preparing solid olefin polymerisation catalyst components which allows the formation of said solid catalyst components without using traditional phthalate type donors via the so called emulsion-solidification method.

Lot of work has been done in this area, and some solutions to prepare solid catalysts via emulsion-solidification method, where phthalate donors or donor precursors have been replaced by non-phthalic donors have been disclosed recently.

Examples of such catalysts and catalyst preparation method via emulsion-solidification method are disclosed e.g. in patent publications WO 2012/007430, WO 2013/098149 and WO 2013/098138.

WO 2012/007430 is one example of a patent application, describing phthalate free catalysts based on citraconate as internal donor and being prepared by the emulsion-solidification method.

However, up to now the mechanical properties of polypropylenes produced with catalysts having citraconate compositions as internal donors did not fulfill all the desired requirements, especially in view of stiffness/impact-balance, which lead to the consequence that significantly higher amount of internal donor had to be used in the phthalate-free catalyst preparation to achieve the desired polymer properties.

After forming solid catalyst particles, particles are typically washed with solvents, like hydrocarbon solvents before final recovery. It is also known to use $TiCl_4$ in washing. According to WO 2012/007430 the washing of the solidified particulate catalyst component can be done in several ways. In Example 13 of WO 2012/007430 one of six washing steps is performed with toluene containing 25 Vol% of $TiCl_4$ and additionally 2 ml of bis-(2-ethylhexyl)citraconate. Looking at the polymerisation results it can be seen that with this catalyst component of Example 13 not really satisfying activities of the catalyst and additionally relatively high undesired XS (xylene soluble) values of the produced polymer are achieved.

The use of internal donor only in the washing step comprising $TiCl_4$, especially if used in high amounts, meaning low ratios of $TiCl_4$/donor, leads to formation of gels in this step, which are no longer present in the final catalyst particles, but which affect the washing performance negatively. For example such gel formation negatively affects the settlement of the solidified catalyst particles, i.e. the separation of the washing liquid from the catalyst particles is worsen, which leads to undesired removal of catalyst particles with the washing liquid and as consequence to lower yield of the catalyst particles. Also the time needed for separating the washing liquid from the catalyst particles is increased by such gel formation.

Furthermore the chemical composition of the catalyst particles may be affected, which then leads to decreased catalyst activity and finally to polymers which do not have the desired properties.

Accordingly, although much development work has been done in the field of Ziegler-Natta catalysts using non-phthalic donors, there remains a need for improved methods of producing ZN catalyst components with desired properties via the emulsion/solidification method. Especially there is a need to find a way which results in the desired catalyst component in high yield, whereby the catalyst comprising the catalyst component shows improved activity and leads to polymers with improved properties, like low XS values.

**Object of the invention**

Accordingly it is one object of the present invention to provide an improved method for producing phthalate free particulate olefin polymerisation catalyst components via the emulsion-solidification method, which leads in a time efficient way to high yields of the catalyst component and additionally yields catalysts having high activity in the polymerisation process.

A further object of the present invention is the catalyst comprising the particulate polymerisation catalyst components and the use of the catalysts for polymerisation processes, especially for polypropylene polymerisation processes.

Surprisingly problems as described above could be solved and defined objects reached by modifying the prior art catalyst component preparation method as described herein.

It has now been surprisingly found that problems as indicated above can be avoided by modifying the emulsion-solidification method for preparation of phthalate free Ziegler-Natta catalyst components by performing special washing steps with washing solutions containing part of the internal donor.

## Description of the invention

Accordingly the present invention provides the process for preparing a particulate olefin polymerisation catalyst component as defined in claim 1.

Thus the present invention provides a process for preparing a particulate olefin polymerisation catalyst component in the form of solid particles via the emulsion-solidification method comprising the steps of:

a) providing a solution of a of a Group 2 metal alkoxy compound,
b) adding said solution from step a) to at least one compound of a transition metal of Group 4 to 6 and producing an emulsion, the dispersed phase of which contains more than 50 mol% of the Group 2 metal,
c) agitating the emulsion in order to maintain the droplets of said dispersed phase preferably within an average size range of 5 to 200 $\mu$m,
d) solidifying said droplets of the dispersed phase;
e) washing said solidified particles,
f) recovering the solidified particles of the olefin polymerisation catalyst component, wherein an internal electron donor is added at any step prior to step c) and being a non-phthalic internal electron donor and the process being

characterized in that
the washing step e) comprises at least three washing steps at any order being

(i) one washing step with $TiCl_4$ containing non-phthalic internal donor
(ii) at least one washing step with aromatic hydrocarbon solvent containing non-phthalic internal donor and
(iii) one to three further washing steps with an aliphatic or aromatic hydrocarbon whereby the total amount of non-phthalic internal donor added to the washing step e) is in the range of 10 to 60 wt% of the total amount of non-phthalic internal donor used in catalyst preparation steps a) to e) and whereby for (i) $TiCl_4$ and the non-phthalic internal donor are optionally precontacted either

($i_1$) at 60 to 90°C for a precontacting time in the range of 5 minutes up to 2 hours or
($i_2$) at 20 to 50°C for a precontacting time in the range of 5 minutes up to 5 days, wherein the internal donor used in the washing step e) is the same as the internal donor used in steps a) or b),

or characterized in that
the washing step e) comprises at least three washing steps at any order being

(i) one washing step with $TiCl_4$ containing non-phthalic internal donor
(ii) at least one washing step with aromatic hydrocarbon solvent, optionally containing non-phthalic internal donor and
(iii) one to three further washing steps with an aliphatic or aromatic hydrocarbon whereby the total amount of non-phthalic internal donor added to the washing step e) is in the range of 10 to 60 wt% of the total amount of non-phthalic internal donor used in catalyst preparation steps a) to e) and whereby for (i) $TiCl_4$ and the non-phthalic internal donor are precontacted either

($i_1$) at 60 to 90°C for a precontacting time in the range of 5 minutes up to 2 hours or
($i_2$) at 20 to 50°C for a precontacting time in the range of 5 minutes up to 5 days
wherein the internal donor used in the washing step e) is the same as the internal donor used in steps a) or b).

Further, the object of the present invention is to prepare a catalyst component with optimum amount of donor, i.e. with decreased amount of donor and still getting a catalyst with desired properties, especially having high activity and leading to polymer with desired properties, like decreased XS.

Preferred embodiments are described in dependent claims and in the following description. Further, the present invention provides the catalyst components obtainable in accordance with the process of the present invention and further the use of the catalyst components in the olefin polymerisation.

The invention will be described in the following in greater detail, referring to the particular preferred embodiments. Essential in all embodiments is that solid catalyst can be prepared via emulsion-solidification method without the need of using phthalate compounds and leading to catalyst particles having desired performance and desired chemical composition.

Catalyst component in the form of solid particles prepared by the method of the invention and having desired chemical composition, morphology and/or particle size and/or particle size distribution and high activity is suitable for use in olefin polymerisation, in particular for propylene polymerisation. Thus polymers produced have no phthalates originating from catalysts. According to the replica effect, the polymer particles produced by using the inventive catalyst have desired morphological properties, too.

The inventive catalyst preparation is based on emulsion-solidification method in which method no separate external carrier materials such as silica or $MgCl_2$ are needed in order to get solid catalyst particles. In the present application expressions emulsion and liquid/liquid two-phase system mean the same and are exchangeable with each other.

Suitable procedures for steps a) to d) and step f) are in principle known from the state of the art and are described for example in WO 2012/007430, WO 2013/098149 and WO 2013/098138, EP2610271, EP 2610270 and EP2610272.

In addition some embodiments for these steps are described below:

*Ad step a)*

For providing a solution of a Group 2 metal alkoxy compounds 4 different ways are possible:

$a_1$) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or

$a_3$) providing a solution of a mixture of the Group 2 metal alkoxy compound (Ax) and a Group 2 metal alkoxy compound (Bx) being the reaction product of a Group 2 metal compound (MC) and the monohydric alcohol (B), optionally in an organic liquid reaction medium; or

$a_4$) providing a solution of Group 2 metal alkoxy compound of formula $M(OR_1)_n(OR_2)_mX_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and m $\neq 0$, $0 < n' \leq 2$ and $0 < m' \leq 2$;

In a preferred embodiment in step a) the solution of $a_2$) or $a_3$) are used, i.e. a solution of (Ax') or a solution of a mixture of (Ax) and (Bx), especially the solution of $a_2$).

Preferably the Group 2 metal is magnesium.

The magnesium alkoxy compounds as defined above can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are glycol monoethers. Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_2$-$C_{16}$ alkyl residue, preferably $C_4$ to $C_{10}$, more preferably $C_6$ to $C_8$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, most preferably 4.1 to 1:4.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used.Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R" $(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

The reaction for the preparation of the magnesium alkoxy compound may be carried out at a temperature of 40° to 70°C. Most suitable temperature is selected depending on the Mg compound and alcohol(s) used.

*Ad step b) and c)*

In step b) the solution of step a) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition

The compound of a transition metal used in the present catalyst preparation method is preferably a compound of a Group 4 to Group 6 metal.

Preferably the transition metal is a Group 4 metal.

The Group 4 metal is preferably titanium. The compound of a transition metal to be reacted with the Group 2 metal alkoxy compound is preferably a halide, preferably Group 4 halide, more preferably titanium tetrahalide. Equivalent to titanium tetrahalide is the combination of an alkoxy titanium halide and a halogenation agent therefore, which are able to form a titanium tetrahalide *in situ.* The most preferred halide is the chloride. Thus, the most preferred transition metal compound is $TiCl_4$.

It is possible to provide the transition metal compound in step (b) as a solution in an organic liquid reaction medium. The organic liquid reaction medium, where said transition metal compound, especially $TiCl_4$, can be solved, can be the same as the organic liquid reaction medium used in step a) or can be different thereto, the latter being preferred.

Preferably the organic liquid reaction medium for transition metal compound is $C_5$ to $C_{10}$ hydrocarbon, more preferably of a $C_6$ to $C_{10}$ alkane, like heptane, octane or nonane, or any mixtures thereof.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

*Ad step d)*

Solidification (step c) of the droplets is suitably carried out by heating the emulsion to a temperature of 70 to 150°C, preferably to 80 to 110°C.

*Ad step f)*

Finally, the washed catalyst component is recovered. For isolating the solidified particles the reaction mixture is allowed to settle and the solid particles are recovered from this reaction mixture for example by syphoning or by an in-stream filtering

unit. The recovered catalyst can further be dried, as by evaporation or flushing with nitrogen or it can be slurried to an oily liquid without any drying step.

*Ad internal donor*

The internal donor used in the preparation of the catalyst in the present invention is a non-phthalic compound and is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

*Ad step e)*

After solidification (step d) the solid catalyst particles are washed according to the invention.
The washing step (e) comprises at least three washing steps at any order being

(i) one washing step with $TiCl_4$ containing non-phthalic internal donor
(ii) at least one washing step with aromatic hydrocarbon solvent, optionally containing non-phthalic internal donor and
(iii) one to three further washing steps with an aliphatic or aromatic hydrocarbon

As disclosed above as washing solutions are used $TiCl_4$, aromatic and aliphatic hydrocarbons. Aromatic hydrocarbon is most suitable toluene and aliphatic hydrocarbons are most suitable selected from pentane and heptane.
According to the present invention the total amount of internal donor needed for the catalyst component preparation is not all added to any of step a) or b), but part of the total amount is added to the washing solutions in step e).
The internal donor used in the washing step e) is the same as the internal donor used in steps a) or b).
The amount of donor added to the washing step e) depends on the chosen Variant of donor addition and can therefore vary from 10 to 60 wt% of the total amount of donor used in catalyst preparation steps a) to e).

*Variant 1:*

So according to the present invention part of the total amount of internal donor is added at least to the $TiCl_4$ washing step.
If internal donor is added only to the $TiCl_4$ washing step, the amount of internal donor added is preferably in the range of 10 to 20 wt% of the total amount of donor used in catalyst preparation steps a) to e).
In this Variant the $TiCl_4$ washing step is followed by at least one toluene washing step (without internal donor) and at least one washing steps with a hydrocarbon selected from heptane and pentane.

*Variant 2:*

If it is intended to add more wt% of the total amount of donor to the washing steps, it is preferred that the donor addition is splitted to 2 to 3 washing steps.
In this Variant 2 the added amount of donor can be 35 to 60 wt%, preferably 40 to 55 wt% of the total amount of donor used in catalyst preparation steps a) to e).
According to this Variant internal donor is not only added to the $TiCl_4$ washing, but also to at least one toluene washing step, which is performed either prior or after the $TiCl_4$ washing.

*Variant 2-1:*

It is for example possible that first a toluene washing step is performed, whereby the washing solution contains also a certain amount of internal donor, which is then followed by the $TiCl_4$/internal donor washing step (with or without precontacting as described below). This step is then followed by one toluene washing step (without internal donor) and one to two further washing steps with a hydrocarbon selected from heptane and pentane.
In this case the internal donor split (wt%/wt%) in the washing steps can vary from 0.5:2 to 2:0.5 and is preferably 1:1

*Variant 2-2:*

It is further possible that first a toluene washing step is performed, whereby the washing solution contains a certain amount of internal donor, secondly the TiCl$_4$/internal donor washing step (with or without precontacting as described below) is performed, which is then followed by a further toluene washing step, whereby the washing solution contains also a certain amount of internal donor.

This step is then followed by one to two further washing steps with a hydrocarbon selected from heptane and pentane.

The amount of donor added to each of these three steps can be equal for each step, but can also vary between the steps.

For example the internal donor split (in wt%) between 1$^{st}$, 2$^{nd}$ and 3$^{rd}$ wash can be 1/1/1 or 1.5/1/1.5 or 1/1/2 or the like.

Donor division among the washing steps enables to decrease the total quantity of the donor compound in synthesis without affecting negatively on the catalyst activity or properties.

Further, the polymer properties seem to be even better when the same donor quantities as used in single wash is used and divided among the washing steps.

Thus with the special washing procedure according to the invention it is possible to prepare a catalyst component with optimum amount of donor, i.e. with decreased amount of donor and still getting a catalyst with desired properties, especially having high activity and leading to polymer with desired properties, like decreased XS.

For the TiCl$_4$ washing step for all Variants, TiCl$_4$ can be added first to the catalyst particles to be washed and then the internal donor is added.

It is however preferred that first the TiCl$_4$ and the internal donor are precontacted for some time and then added to the to be washed catalyst particles.

The precontacting time depends on the precontacting temperature.

If the precontact happens at temperatures around the washing step temperature, i.e. at a temperature of 60 to 90 °C, then the precontacting time is preferably in the range of 5 minutes up to 2 hours, preferably 5 minutes up to 1.5 hours and more preferably 5 minutes up to 1.0 hour.

If the precontact happens at lower temperature than the washing step temperature, i.e. at a temperature of 20 to 50°C, the precontacting time can be longer, like up to several days, i.e. 5 minutes up to 5 days, preferably 5 minutes up to 4 days and more preferably 5 minutes up to 3 days.

The finally obtained Ziegler-Natta catalyst is desirably in the form of particles having generally an average particle size range of 5 to 200 $\mu$m, preferably 10 to 100. Particles are compact with low porosity and have surface area below 20 g/m$^2$, more preferably below 10 g/m$^2$. Typically the amount of Ti is 1 to 6 wt%, Mg 8 to 20 wt% and donor 10 to 40 wt% of the catalyst composition.

The Ziegler-Natta catalyst is preferably used in a polymerisation process in association with an alkyl aluminum cocatalyst and external donor(s).

Therefore as further component in a polymerisation process an external donor is present. Suitable external donors include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors (ED) are the dicyclopentyl dimethoxy silane donor (D-donor) or the cyclohexylmethyl dimethoxy silane donor (C-donor)

In addition to the Ziegler-Natta catalyst component and the external donor (ED) a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 5 to 45, preferably is in the range of 5 to 35, more preferably is in the range of 5 to 25; and optionally
(b) the mol-ratio of co-catalyst (Co) to titanium compound (TC) [Co/TC] must be in the range of above 80 to 500, preferably is in the range of 100 to 350, still more preferably is in the range of 120 to 300.

So the process according to the invention provides a more efficient way for producing the catalyst component.

Due to the more efficient washing procedure it is possible to prepare the catalyst component with the desired chemical composition and with higher yields, which makes the process furthermore more cost efficient.

In addition the catalyst components prepared according to the present invention, especially washed according to the present invention yield catalysts with improved activity and lower hydrogen sensitivity in a polymerisation process, especially in preparing polypropylene, more preferably in a polymerisation process aiming for low-MFR-polymers.

Additionally polypropylene produced with a catalyst comprising the catalyst components prepared according to the invention shows also improved properties, like low XS value.

Thus it is a further object of the present invention to provide catalyst components in form of solid particles by a process as describe above and to the use thereof for the preparation of a catalyst system being suitable in olefin polymerisation processes.

Thus a further embodiment of the present invention is a olefin polymerisation catalyst comprising particles of the catalyst component obtainable by the process as described above and a co-catalyst, preferably an alkyl aluminum co-catalyst and an external electron donor, and the use of it in a polymerisation process.

The catalyst according to the invention is suitable for use in olefin polymerisation, like ethylene or propylene, in particular for propylene polymerisation, optionally with other co-monomers selected from $C_2$ - $C_{12}$ monomers, preferably $C_2$ - $C_6$ monomers.

Polymerisation processes, where the catalyst components of the invention are useful comprise at least one polymerisation stage, where polymerisation is typically carried out in solution, slurry, bulk or gas phase.

Accordingly, the at least one polymerisation stage is preferably carried out in a slurry reactor which can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR)

Typically the polymerisation process comprises additional polymerisation stages or reactors. In one particular embodiment the process contains at least one bulk reactor zone and at least one gas phase reactor zone, each zone comprising at least one reactor and all reactors being arranged in cascade. In one particularly preferred embodiment the polymerisation process for polymerising olefins, in particular propylene optionally with comonomers, like ethylene or other alpha-olefins, comprises at least one bulk reactor and at least one gas phase reactor arranged in that order. In some preferred processes the process comprises one bulk reactor and at least two, e.g. two or three gas phase reactors. In these kinds of processes use of higher polymerisation temperature (60 °C or higher, preferably 70°C or higher, even 80 °C or higher) either in some or all reactors of the reactor cascade, is preferred in order to achieve some specific properties to the polymers.

The process may further comprise pre- and post-reactors. Pre-reactors comprise typically pre-polymerisation reactors.

A preferred multistage process is a "loop-gas phase"-process, such as developed by Borealis (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

**EXPERIMENTAL PART**

**METHODS**

**Melt Flow Rate** MFR: ISO 1133; 230 °C/2.16 kg load

**ICP Analysis (Al, Mg, Ti)**

The elemental analysis of a catalyst was performed by taking a solid sample of mass, M, cooling over dry ice. Samples were diluted up to a known volume, V, by dissolving in nitric acid (HNO3, 65 %, 5 % of V) and freshly deionised (DI) water (5 % of V). The solution was further diluted with DI water up to the final volume, V, and left to stabilize for two hours.

The analysis was run at room temperature using a Thermo Elemental iCAP 6300 Inductively Coupled Plasma - Optical Emmision Spectrometer (ICP-OES) which was calibrated using a blank (a solution of 5 % HNO3), and standards of 0.5 ppm, 1 ppm, 10 ppm, 50 ppm, 100 ppm and 300 ppm of Al, Mg and Ti in solutions of 5 % HNO3.

Immediately before analysis the calibration is 'resloped' using the blank and 100 ppm standard, a quality control sample (20 ppm Al, Mg and Ti in a solution of 5 % HNO3 in DI water) is run to confirm the reslope. The QC sample is also run after every 5th sample and at the end of a scheduled analysis set.

The content of Mg was monitored using the 285.213 nm line and the content for Ti using 336.121 nm line. The content of aluminium was monitored via the 167.079 nm line, when Al concentration in ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

**Donor analysis via Gas Chromatography GC**

The donor analysis of a catalyst was performed by taking a solid sample of mass, M, approximately 2 ml of solvent, dichloromethane, was added. Following this approximately 1 ml of deionised water was added to the vial. Finally, a known mass, N, of an internal standard, nonane, was added. The mixture was then sonicated for 15 min, to ensure full dissolution.

After sonication the sample is left to settle into two phases and an aliquot of the organic phase is removed, this is then filtered through a 0.45 $\mu$m nylon filter into a vial suitable for the gas chromatography instrument.

The analysis is performed on a Perkin Elmer Auto System XL Gas Chromatograph containing a split loop injector and flame ionization detector. The column is a DB-1, 30 m long with an inner diameter of 0.32 mm and a phase thickness of 0.25 $\mu$m. The system stays at 40 °C for 5 minutes before ramping at 10 °C/min up to 250 °C; the system is kept at temperature for a further 4 minutes. If required the peak temperature could be raised to 300 °C.

The results are calculated in the following manner.

$$\text{Component (wt\%)} = \frac{10 \, Ax * F * N}{Ay * Fistd * M} * 100$$

where:

Ax = component area
F = component factor
N = mass of internal standard (nonane), mg
Ay = area of internal standard (nonane)
Fistd = factor of internal standard (nonane)
M = mass of the sample, mg

**Xylene solubles XS:** Xylene soluble fraction of product at 25°C.

2.0 g of polymer are dissolved in 250 ml p-xylene at 135 °C under agitation. After 30±2 minutes the solution is allowed to cool for 15 minutes at ambient temperature and then allowed to settle for 30 minutes at 25±0.5 °C. The solution is filtered with filter paper into two 100 ml flasks.

The solution from the first 100 ml vessel is evaporated in nitrogen flow and the residue is dried under vacuum at 90 °C until constant weight is reached.

XS% =(100 x m1 x v0) / (m0 x v1)
m0 = initial polymer amount (g)
m1 = weight of residue (g)
v0 = initial volume (ml)
v1 = volume of analyzed sample (ml)

**EXAMPLES:**

**Used Chemicals:**

2-ethyl-hexanol - CAS no 104-76-7
propylene glycol butyl mono ether - CAS no 5131-66-8, provided by Sigma-Aldrich
bis(2-ethylhexyl) citraconate - CAS no 1354569-12-2
Necadd 447 - provided by M-I SWACO
Viscoplex 1-254 - provided by RohMax Additives GmbH
diethyl aluminum chloride - CAS no 96-10-6, provided by Witco

**a) Catalyst preparation**

50 ml of 2-ethylhexanol and 23.5 ml of propylene glycol butyl monoether (in a molar ratio 2/1) were added to a 300 ml glass reactor. Then 200 ml of a 20 % solution in toluene of BOMAG (butyl octyl magnesium) provided by Crompton GmbH were slowly added to the well stirred alcohol mixture. During the addition the temperature was kept below 30°C °C. After addition the temperature of the reaction mixture was raised to 60 °C and mixing was continued at this temperature for 60 minutes. Finally after cooling to room temperature the obtained Mg-alkoxide was transferred to bottles to be stored.

40.1 g of Mg alkoxide prepared above was mixed with 5.9 ml bis(2-ethylhexyl) citraconate for 5 min. After mixing the obtained Mg complex was used immediately in the preparation of catalyst component.

6.5 ml titanium tetrachloride was placed in a 50 ml reactor equipped with a mechanical stirrer at 25°C. Mixing speed was adjusted to 300 rpm. 11.2 ml of Mg-complex prepared above were added within 30 minutes keeping the temperature at 25°C. 1.0 ml of Viscoplex 1-254 and 1.0 ml of a toluene solution with 2 mg Necadd 447 was added. Then 8.0 ml of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 80°C.

The solid material (catalyst slurry) was washed 4 times: Washings were made at 80 °C under stirring 30 min with 300 rpm. After stirring was stopped the reaction mixture was allowed to settle for 20-30 minutes and followed by siphoning.

**a-1) Comparative Example 1:**

*Wash 1:* Washing was made with a mixture of 10 ml of $TiCl_4$ and 1.3 ml donor (bis(2-ethylhexyl) citraconate), whereby first $TiCl_4$ was added to the catalyst slurry followed by the donor
*Wash 2:* Washing was made with 33 ml toluene.
Wash 3: Washing was made with 20 ml of heptane.
*Wash 4:* Washing was made with 20 ml of heptane

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

**a-2) Comparative Example 2:**

*Wash 1*: Washing was made with a mixture of 10 ml of $TiCl_4$ and 1.3 ml donor (bis(2-ethylhexyl) citraconate), whereby

first TiCl$_4$ was precontacted with the donor for 5 hours at 80°C and then added to the catalyst slurry.
*Wash* 2: Washing was made with 33 ml toluene.
Wash 3: Washing was made with 20 ml of heptane.
*Wash 4*: Washing was made with 20 ml of heptane

Afterwards stirring was stopped and the reaction mixture was allowed to settle for 10 minutes decreasing the temperature to 70°C with subsequent siphoning, and followed by N$_2$ sparging for 20 minutes to yield an air sensitive powder.

### a-3) Inventive Example 1:

*Wash 1:* Washing was made with a mixture of 10 ml of TiCl$_4$ and 1.3 ml donor (bis(2-ethylhexyl) citraconate), whereby first TiCl$_4$ was precontacted with the donor for 30 minutes at room temperature and then added to the catalyst slurry.
*Wash 2:* Washing was made with 33 ml toluene.
Wash 3: Washing was made with 20 ml of heptane.
*Wash 4:* Washing was made with 20 ml of heptane

Afterwards stirring was stopped and the reaction mixture was allowed to settle for 10 minutes decreasing the temperature to 70°C with subsequent siphoning, and followed by N$_2$ sparging for 20 minutes to yield an air sensitive powder.

### a-4) Inventive Example 2:

*Wash 1:* Washing was made with a mixture of 10 ml of TiCl$_4$ and 1.3 ml donor (bis(2-ethylhexyl) citraconate), whereby first TiCl$_4$ was precontacted with the donor for 2 days at room temperature and then added to the catalyst slurry.
*Wash 2:* Washing was made with 33 ml toluene.
Wash 3: Washing was made with 20 ml of heptane.
*Wash 4:* Washing was made with 20 ml of heptane

Afterwards stirring was stopped and the reaction mixture was allowed to settle for 10 minutes decreasing the temperature to 70°C with subsequent siphoning, and followed by N$_2$ sparging for 20 minutes to yield an air sensitive powder.
Table 1 shows the chemical composition of the catalyst components prepared according to a-1) to a-4)

**Table 1:**

| Example | Ti [wt%] | Mg [wt%] | Donor [wt%] |
|---------|----------|----------|-------------|
| CE1 | 3.92 | 13.1 | 24.8 |
| CE2 | 2.37 | 14.4 | 14.1 |
| IE1 | 3.02 | 13.8 | 25.3 |
| IE2 | 2.89 | 13.1 | 24.6 |

### b) Catalyst preparation

50 ml of 2-ethylhexanol and 23.5 ml of propylene glycol butyl monoether (in a molar ratio 2/1) were added to a 300 ml glass reactor. Then 200 ml of a 20 % solution in toluene of BOMAG (butyl octyl magnesium) provided by Crompton GmbH were slowly added to the well stirred alcohol mixture. During the addition the temperature was kept below 30°C °C. After addition the temperature of the reaction mixture was raised to 60 °C and mixing was continued at this temperature for 60 minutes. Finally after cooling to room temperature the obtained Mg-alkoxide was transferred to bottles to be stored.
26.5 g of Mg alkoxide prepared above was mixed with 4.0 ml bis(2-ethylhexyl) citraconate for 5 min. After mixing the obtained Mg complex was used immediately in the preparation of catalyst component.

19.5 ml titanium tetrachloride was placed in a 50 ml reactor equipped with a mechanical stirrer at 25°C. Mixing speed was adjusted to 170 rpm. The Mg-complex prepared above was added within 30 minutes keeping the temperature at 25°C. 3.0 ml of Viscoplex 1-254 and 1.0 ml of a toluene solution with 2 mg Necadd 447 was added. Then 24.0 ml of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 80°C.

The solid material was washed 5 times: Washings were made at 80 °C under stirring 30 min with 170 rpm. After stirring was stopped the reaction mixture was allowed to settle for 20-30 minutes and followed by siphoning.

**b-1) Comparative Example 3**

  *Wash 1:* Washing was made with 100 ml toluene
  *Wash 2:* Washing was made with a mixture of 30 ml of $TiCl_4$ and 4 ml donor (bis(2-ethylhexyl) citraconate)
  *Wash 3:* Washing was made with 100 ml toluene.
  Wash 4: Washing was made with 60 ml of heptane.
  Wash 5: Washing was made with 60 ml of heptane

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

**b-2) Inventive Example 3**

  *Wash* 1: Washing was made with a mixture of 100 ml toluene and 1 ml donor (bis(2-ethylhexyl) citraconate)
  *Wash 2:* Washing was made with a mixture of 30 ml of $TiCl_4$ and 1 ml donor (bis(2-ethylhexyl) citraconate)
  *Wash 3:* Washing was made with a mixture of 100 ml toluene and 1 ml donor (bis(2-ethylhexyl) citraconate)
  Wash 4: Washing was made with 60 ml of heptane.
  Wash 5: Washing was made with 60 ml of heptane

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

**b-3) Inventive Example 4**

  *Wash 1:* Washing was made with a mixture of 100 ml toluene and 1 ml donor (bis(2-ethylhexyl) citraconate)
  *Wash 2:* Washing was made with a mixture of 30 ml of $TiCl_4$ and 1 ml donor (bis(2-ethylhexyl) citraconate)
  *Wash 3:* Washing was made with a mixture of 100 ml toluene and 2 ml donor (bis(2-ethylhexyl) citraconate)
  Wash 4: Washing was made with 60 ml of heptane.
  Wash 5: Washing was made with 60 ml of heptane

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

**b-4) Inventive Example 5**

  *Wash 1:* Washing was made with a mixture of 100 ml toluene and 1.5 ml donor (bis(2-ethylhexyl) citraconate)
  *Wash 2:* Washing was made with a mixture of 30 ml of $TiCl_4$ and 1 ml donor (bis(2-ethylhexyl) citraconate)
  *Wash 3:* Washing was made with a mixture of 100 ml toluene and 1.5 ml donor (bis(2-ethylhexyl) citraconate)

Wash 4: Washing was made with 60 ml of heptane.
Wash 5: Washing was made with 60 ml of heptane

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

Table 2 shows the chemical composition of the catalyst components prepared according to b-1) to b-4)

**Table 2:**

| Example | Ti [wt%] | Mg [wt%] | Donor [wt%] | Yield [g] |
|---------|----------|----------|-------------|-----------|
| CE3 | 2.87 | 13.7 | 25.8 | 1.9 |
| IE3 | 2.39 | 13.4 | 27.0 | 2.5 |
| IE4 | 3.23 | 13.1 | 28.2 | 2.1 |
| IE5 | 2.55 | 14.3 | 29.5 | 3.0 |

As can be seen from Table 2 the catalyst component washed according to the invention is obtained in higher yields than to comparative example CE3

**Polymerisation**

**Polymerisation with catalysts prepared according to procedure a-1) to a-4) and prepared according to procedure b-1) to b-4)**

A 5 litre stainless steel reactor was used for propylene polymerisations.

About 0.9 ml triethyl aluminium (TEA) (from Witco, used as received) as a co-catalyst, ca 0.13 ml dicyclopentyl dimethoxy silane (Donor D) (from Wacker, dried with molecular sieves) as an external donor and 30 ml n-pentane were mixed and allowed to react for 5 minutes. Half of the mixture was then added to the polymerisation reactor and the other half was mixed with about 20 mg of a catalyst. After additional 5 minutes the catalyst/TEA/donor/n-pentane mixture was added to the reactor. The Al/Ti ratio was 250 mol/mol and the Al/DCDS ratio was 10 mol/mol. 200 mmol hydrogen and 1400 g propylene were introduced into the reactor and the temperature was raised within ca 15 minutes to the polymerisation temperature (80 °C). The polymerisation time after reaching polymerisation temperature was 60 minutes, after which the polymer formed was taken out from the reactor.

Activity of the catalyst as well as MFR and XS of the polymer is shown in table 3 and 4.

**Table 3: Examples CE1, CE2, IE1 and IE2**

| Example | Activity [kgPP/gCat*h] | MFR | XS |
|---------|------------------------|-----|-----|
| CE1 | 28.55 | 11 | 1.4 |
| CE2 | 21.29 | 16 | 1.9 |
| IE1 | 44.73 | 11 | 1.4 |
| IE2 | 45.82 | 11 | 1.6 |

As can be seen from Table 3 the catalysts comprising the catalyst components washed according to the invention (a-3 and a-4) have clearly higher activity.

**Table 4: Examples CE3, IE3, IE4 and IE5**

| Example | Activity [kgPP/gCat*h] | MFR | XS |
|---------|------------------------|-----|-----|
| CE3 | 41.3 | 11 | 1.4 |
| IE3 | 41.7 | 9.9 | 1.3 |
| IE4 | 42.5 | 8.5 | 1.1 |
| IE5 | 45.4 | 11 | 1.3 |

As can be seen from Table 4 polymers produced with the catalysts obtained with the inventive process (b-2, b-3 and b-4) show improved properties, i.e. lower XS and MFR. Also the activity is increased with the inventive process.

**Claims**

1. Process for preparing a particulate olefin polymerisation catalyst component in the form of solid particles via the emulsion/solidification method comprising the steps of:

   a) providing a solution of a Group 2 metal alkoxy compound,
   b) adding said solution from step a) to at least one compound of a transition metal of Group 4 to 6 and producing an emulsion, the dispersed phase of which contains more than 50 mol% of the Group 2 metal,
   c) agitating the emulsion in order to maintain the droplets of said dispersed phase preferably within an average size range of 5 to 200 $\mu$m,
   d) solidifying said droplets of the dispersed phase;
   e) washing said solidified particles,
   f) recovering the solidified particles of the olefin polymerisation catalyst component,

   wherein an internal electron donor is added at any step prior to step c) and being a non-phthalic internal electron donor and the process being **characterized in that**

   the washing step e) comprises at least three washing steps at any order being

   (i) one washing step with $TiCl_4$ containing non-phthalic internal donor
   (ii) at least one washing step with aromatic hydrocarbon solvent containing non-phthalic internal donor and
   (iii) one to three further washing steps with an aliphatic or aromatic hydrocarbon

   whereby the total amount of non-phthalic internal donor added to the washing step e) is in the range of 10 to 60 wt% of the total amount of non-phthalic internal donor used in catalyst preparation steps a) to e) and whereby for (i) $TiCl_4$ and the non-phthalic internal donor are optionally precontacted either (ii) at 60 to 90°C for a precontacting time in the range of 5 minutes up to 2 hours or
   ($i_2$) at 20 to 50°C for a precontacting time in the range of 5 minutes up to 5 days,
   wherein the internal donor used in the washing step e) is the same as the internal donor used in steps a) or b),
   or **characterized in that**
   the washing step e) comprises at least three washing steps at any order being

   (i) one washing step with $TiCl_4$ containing non-phthalic internal donor
   (ii) at least one washing step with aromatic hydrocarbon solvent, optionally containing non-phthalic internal donor and
   (iii) one to three further washing steps with an aliphatic or aromatic hydrocarbon

   whereby the total amount of non-phthalic internal donor added to the washing step e) is in the range of 10 to 60 wt% of the total amount of non-phthalic internal donor used in catalyst preparation steps a) to e) and whereby for (i) $TiCl_4$ and the non-phthalic internal donor are precontacted either ($i_1$) at 60 to 90°C for a precontacting time in the range of 5 minutes up to 2 hours or
   ($i_2$) at 20 to 50°C for a precontacting time in the range of 5 minutes up to 5 days
   wherein the internal donor used in the washing step e) is the same as the internal donor used in steps a) or b).

2. Process according to claim 1, wherein providing a solution of a Group 2 metal alkoxy compound can be done either by

   $a_1$) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or
   $a_2$) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or
   $a_3$) providing a solution of a mixture of the Group 2 metal alkoxy compound (Ax) and a Group 2 metal alkoxy compound (Bx) being the reaction product of a Group 2 metal compound (MC) and the monohydric alcohol (B), optionally in an organic liquid reaction medium; or

$a_4$)providing a solution of Group 2 metal alkoxy compound of formula $M(OR_1)_n(OR_2)_mX_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and $m \neq 0$, $0 < n' \leq 2$ and $0 < m' \leq 2$.

**3.** Process according to claim 2 wherein in step a) a solution of a-2) is provided.

**4.** Process according to any preceding claim, wherein the alcohol (A) is a $C_2$ to $C_4$ glycol monoether, wherein the ether moiety comprises from 2 to 18 carbon atoms, preferably 2 to 12 carbon atoms.

**5.** Process according to any preceding claim, wherein the alcohol (B) is formula ROH, with R being straight-chain or branched $C_2$-$C_{16}$ alkyl residue.

**6.** Process according to any preceding claim wherein said Group 2 metal is magnesium.

**7.** A process according to any preceding claim wherein said transition metal is a Group 4 to Group 6 metal, preferably Ti.

**8.** A process according to any preceding claim wherein said non-phthalic internal electron donor is selected from malonates, maleates, succinates, citraconates, glutarates, cyclohexene-1,2-dicarboxylates and benzoates, and any derivatives and/or mixtures thereof.

**9.** A process according to any preceding claim wherein in the washing step e) the aromatic hydrocarbon is toluene and the aliphatic hydrocarbon is selected from heptane and pentane.

**10.** A process according to any preceding claim wherein in the washing step e) non-phthalic internal donor is added only to the $TiCl_4$ washing step (i), whereby the amount of non-phthalic internal donor added is preferably in the range of 10 to 20 wt% of the total amount of non-phthalic internal donor used in catalyst preparation steps a) to e).

**11.** A process according to any preceding claim 1 to 9, wherein in the washing step e) the non-phthalic internal donor addition is splitted to 2 to 3 washing steps, whereby the added amount of donor can be 35 to 60 wt% of the total amount of donor used in catalyst preparation steps a) to e), and

(1) whereby first a toluene washing step is performed, and the washing solution contains a certain amount of internal donor, which is then followed by the $TiCl_4$/internal donor washing step(i), which is then followed by one further toluene washing step without internal donor, and one to two further washing steps with a hydrocarbon selected from heptane and pentane or
(2) whereby first a toluene washing step is performed, and the washing solution contains a certain amount of internal donor, secondly the $TiCl_4$/internal donor washing step is performed, which is then followed by a further toluene washing step, where the washing solution contains also a certain amount of internal donor, being followed by one to two further washing steps with a hydrocarbon selected from heptane and pentane.

**12.** A process according to claim 11, wherein the internal donor amount added in (1) can be splitted in a ratio (wt%/wt%) of from 0.5:2 to 2:0.5, and preferably of 1:1 and the internal donor amount added in (2) can be equal for each of the three steps, but can also vary between the steps, like 1/1/1 or 1.5/1/1.5 or 1/1/2.

**13.** Particles of the catalyst component obtainable according to any of claims 1 to 12.

**14.** An olefin polymerisation catalyst comprising particles of the catalyst component obtainable by the method of any claim 1 to 11 or particles of the catalyst component of claim 13 and a co-catalyst, preferably an alkyl aluminum co-catalyst and optionally an external electron donor.

**15.** A polymerisation process for producing olefin polymers wherein ethylene or propylene, optionally with co-monomers, selected from $C_2$ to $C_{12}$ monomers are polymerised in the presence of the catalyst of claim 14.

**Patentansprüche**

1. Verfahren zur Herstellung einer teilchenförmigen Katalysatorkomponente zur Polymerisation von Olefinen in Form von festen Teilchen mittels des Emulsions-/Verfestigungsverfahrens, das die folgenden Schritte umfasst:

   a) Bereitstellung einer Lösung einer Alkoxy-Verbindung eines Metalls der Gruppe 2,
   b) Zugabe der Lösung aus Schritt a) zu mindestens einer Verbindung eines Übergangsmetalls der Gruppe 4 bis 6 und Herstellung einer Emulsion, deren dispergierte Phase mehr als 50 mol-% des Metalls der Gruppe 2 enthält,
   c) Rühren der Emulsion, um die Tröpfchen der dispergierten Phase vorzugsweise in einem durchschnittlichen Größenbereich von 5 bis 200 $\mu$m zu halten,
   d) Verfestigung der Tröpfchen der dispergierten Phase;
   e) Waschen der verfestigten Teilchen,
   f) Gewinnung der verfestigten Teilchen der Katalysatorkomponente zur Polymerisation von Olefinen,

   wobei ein interner Elektronendonor in einem beliebigen Schritt vor Schritt c) zugegeben wird, der ein nicht-phthalischer interner Elektronendonor ist, und wobei das Verfahren **dadurch gekennzeichnet ist, dass**

   der Waschschritt e) mindestens drei Waschschritte in beliebiger Reihenfolge umfasst, nämlich

   (i) einen Waschschritt mit TiCl$_4$, das einen nicht-phthalischen internen Donor enthält
   (ii) mindestens einen Waschschritt mit einem Lösungsmittel, das ein aromatischer Kohlenwasserstoff ist, das einen nicht-phthalischen internen Donor enthält, und
   (iii) ein bis drei weitere Waschschritte mit einem aliphatischen oder aromatischen Kohlenwasserstoff

   wobei die Gesamtmenge an nicht-phthalischem internen Donor, die dem Waschschritt e) zugesetzt wird, im Bereich von 10 bis 60 Gew.-% der Gesamtmenge an nicht-phthalischem internen Donor liegt, die in den Schritten zur Herstellung des Katalysators a) bis e) verwendet wird, und wobei für (i) TiCl$_4$ und der nicht-phthalische interne Donor wahlweise vorkontaktiert werden entweder

   (i$_1$) bei 60 bis 90 °C für eine Vorkontaktierungszeit von 5 Minuten bis zu 2 Stunden oder
   (i$_2$) bei 20 bis 50 °C für eine Vorkontaktierungszeit von 5 Minuten bis zu 5 Tagen, wobei der im Waschschritt e) verwendete interne Donor derselbe ist wie der in den Schritten a) oder b) verwendete interne Donor,
   oder **dadurch gekennzeichnet ist, dass**
   der Waschschritt e) mindestens drei Waschschritte in beliebiger Reihenfolge umfasst, nämlich

   (i) einen Waschschritt mit TiCl$_4$, das einen nicht-phthalischen internen Donor enthält
   (ii) mindestens einen Waschschritt mit einem Lösungsmittel, das ein aromatischer Kohlenwasserstoff ist, und das gegebenenfalls einen nicht-phthalischen internen Donor enthält, und
   (iii) ein bis drei weitere Waschschritte mit einem aliphatischen oder aromatischen Kohlenwasserstoff

   wobei die Gesamtmenge an nicht-phthalischem internen Donor, die dem Waschschritt e) zugesetzt wird, im Bereich von 10 bis 60 Gew.-% der Gesamtmenge an nicht-phthalischem internen Donor liegt, die in den Schritten zur Herstellung eines Katalysators a) bis e) verwendet wird, und wobei für (i) TiCl$_4$ und der nicht-phthalische interne Donor vorkontaktiert werden entweder

   (i$_1$) bei 60 bis 90 °C für eine Vorkontaktierungszeit von 5 Minuten bis zu 2 Stunden oder
   (i$_2$) bei 20 bis 50°C für eine Vorkontaktierungszeit im Bereich von 5 Minuten bis zu 5 Tagen
   wobei der im Waschschritt e) verwendete interne Donor derselbe ist wie der in den Schritten a) oder b) verwendete interne Donor.

2. Verfahren nach Anspruch 1, wobei die Bereitstellung einer Lösung einer Alkoxy-Verbindung eines Metalls der Gruppe 2 entweder erfolgen kann durch

   a$_1$) Bereitstellen einer Lösung von mindestens einer Alkoxy-Verbindung eines Metalls der Gruppe 2 (Ax), die das Reaktionsprodukt einer Metallverbindung (MC) eines Metalls der Gruppe 2 und eines einwertigen Alkohols (A) ist, der zusätzlich zum Hydroxylrest mindestens einen Etherrest enthält, gegebenenfalls in einem organischen flüssigen Reaktionsmedium; oder
   a$_2$) einer Lösung von mindestens einer Alkoxy-Verbindung eines Metalls der Gruppe 2 (Ax'), die das Reaktionsprodukt einer Metallverbindung (MC) eines Metalls der Gruppe 2 und einer Alkoholmischung des einwertigen Alkohols (A) und eines einwertigen Alkohols (B) der Formel ROH ist, gegebenenfalls in einem organischen flüssigen Reaktionsmedium; oder

a$_3$) Bereitstellen einer Lösung einer Mischung aus der Alkoxy-Verbindung eines Metalls der Gruppe 2 (Ax) und einer Alkoxy-Verbindung eines Metalls der Gruppe 2 (Bx), die das Reaktionsprodukt einer Metallverbindung (MC) eines Metalls der Gruppe 2 und des einwertigen Alkohols (B) ist, gegebenenfalls in einem organischen flüssigen Reaktionsmedium; oder

a$_4$) Bereitstellen einer Lösung einer Alkoxy-Verbindung eines Metalls der Gruppe 2 der Formel $M(OR_1)_n(OR_2)_m X_{2-n-m}$ oder einer Mischung von Alkoxiden der Gruppe 2 $M(OR_1)_{n'}X_{2-n'}$ und $M(OR_2)_{m'}X_{2-m'}$, wobei M ein Metall der Gruppe 2 ist, X ein Halogen ist, $R_1$ und $R_2$ verschiedene Alkylgruppen mit $C_2$ bis $C_{16}$ Kohlenstoffatomen sind, und $0 \leq n < 2$, $0 \leq m < 2$ und $n+m+(2-n-m) = 2$, vorausgesetzt, dass sowohl n als auch $m \neq 0$, $0 < n' \leq 2$ und $0 < m' \leq 2$ sind.

3. Verfahren nach Anspruch 2, wobei in Schritt a) eine Lösung von a-2) bereitgestellt wird.

4. Verfahren nach einem der vorhergehenden Ansprüche, wobei der Alkohol (A) ein $C_2$ bis $C_4$ Glykolmonoether ist, wobei der Etherrest 2 bis 18 Kohlenstoffatome, vorzugsweise 2 bis 12 Kohlenstoffatome umfasst.

5. Verfahren nach einem der vorhergehenden Ansprüche, wobei der Alkohol (B) die Formel ROH hat, wobei R ein geradkettiger oder verzweigter $C_2$ -$C_{16}$ Alkylrest ist.

6. Verfahren nach einem der vorhergehenden Ansprüche, wobei das Metall der Gruppe 2 Magnesium ist.

7. Verfahren nach einem der vorhergehenden Ansprüche, wobei das Übergangsmetall ein Metall der Gruppe 4 bis Gruppe 6, vorzugsweise Ti, ist.

8. Verfahren nach einem der vorhergehenden Ansprüche, wobei der nicht-phthalische interne Elektronendonor ausgewählt ist aus Malonaten, Maleaten, Succinaten, Citraconaten, Glutaraten, Cyclohexen-1,2-dicarboxylaten und Benzoaten und beliebigen Derivaten und/oder Gemischen davon.

9. Verfahren nach einem der vorhergehenden Ansprüche, wobei in dem Waschschritt e) der aromatische Kohlenwasserstoff Toluol ist und der aliphatische Kohlenwasserstoff ausgewählt ist aus Heptan und Pentan.

10. Verfahren nach einem der vorhergehenden Ansprüche, wobei im Waschschritt e) nicht-phthalischer interner Donor nur zum TiCl$_4$ Waschschritt (i) zugegeben wird, wobei die Menge des zugegebenen nicht-phthalischen internen Donors vorzugsweise im Bereich von 10 bis 20 Gew.-% der Gesamtmenge des in den Katalysatorherstellungsschritten a) bis e) verwendeten nicht-phthalischen internen Donors liegt.

11. Verfahren nach einem der vorhergehenden Ansprüche 1 bis 9, wobei im Waschschritt e) die Zugabe des nicht-phthalischen internen Donors auf 2 bis 3 Waschschritte aufgeteilt wird, wobei die zugegebene Menge des Donors 35 bis 60 Gew.-% der Gesamtmenge des in den Katalysatorherstellungsschritten a) bis e) verwendeten Donors betragen kann, und

(1) wobei zunächst ein Waschschritt mit Toluol durchgeführt wird und die Waschlösung eine bestimmte Menge an internem Donor enthält, worauf der TiCl$_4$ /interne Donor-Waschschritt (i) folgt, auf den dann ein weiterer Waschschritt mit Toluol ohne internen Donor folgt und ein bis zwei weitere Waschschritte mit einem Kohlenwasserstoff, ausgewählt aus Heptan und Pentan, folgen oder

(2) wobei zunächst ein Waschschritt mit Toluol durchgeführt wird und die Waschlösung eine bestimmte Menge an internem Donor enthält, dann der TiCl$_4$ /interne Donor-Waschschritt durchgeführt wird, auf den dann ein weiterer Waschschritt mit Toluol folgt, wobei die Waschlösung ebenfalls eine bestimmte Menge an internem Donor enthält, gefolgt von ein bis zwei weiteren Waschschritten mit einem Kohlenwasserstoff, ausgewählt aus Heptan und Pentan.

12. Verfahren nach Anspruch 11, **dadurch gekennzeichnet, dass** die in (1) zugegebene Menge an internem Donor in einem Verhältnis (Gew.-%/Gew.-%) von 0,5:2 bis 2:0,5 und vorzugsweise von 1:1 aufgeteilt werden kann und die in (2) zugegebene Menge an internem Donor für jede der drei Stufen gleich sein kann, aber auch zwischen den Stufen variieren kann, wie 1/1/1 oder 1,5/1/1,5 oder 1/1/2.

13. Teilchen der Katalysatorkomponente, erhältlich nach einem der Ansprüche 1 bis 12.

**14.** Ein Katalysator zur Polymerisation von Olefinen, umfassend Teilchen der Katalysatorkomponente, die durch das Verfahren nach einem der Ansprüche 1 bis 11 erhältlich ist, oder Teilchen der Katalysatorkomponente nach Anspruch 13 und einen Cokatalysator, vorzugsweise einen Alkylaluminium-Cokatalysator und gegebenenfalls einen externen Elektronendonor.

**15.** Ein Verfahren zur Polymerisation zur Herstellung von Polymeren von Olefinen, bei dem Ethylen oder Propylen, gegebenenfalls mit Co-Monomeren, ausgewählt aus $C_2$ bis $C_{12}$ Monomeren, in Gegenwart des Katalysators nach Anspruch 14 polymerisiert werden.

**Revendications**

**1.** Procédé pour préparer un composant de catalyseur de polymérisation d'oléfines particulaire sous la forme de particules solides via un procédé d'émulsion/ solidification, comprenant les étapes de :

a) fourniture d'une solution d'un composé alcoxy d'un métal du Groupe 2,
b) addition de ladite solution de l'étape a) à au moins un composé d'un métal de transition des Groupes 4 à 6 et production d'une émulsion dont la phase dispersée contient plus de 50 % en moles du métal du Groupe 2,
c) agitation de l'émulsion afin de maintenir les gouttelettes de ladite phase dispersée de préférence dans une plage de tailles moyennes de 5 à 200 $\mu$m,
d) solidification desdites gouttelettes de la phase dispersée,
e) lavage desdites particules solidifiées,
f) récupération des particules solidifiées du composant de catalyseur de polymérisation d'oléfines,
dans lequel un donneur d'électron interne est ajouté à n'importe quelle étape avant l'étape c) et est un donneur d'électron interne non phtalique, et
le procédé étant **caractérisé en ce que** l'étape de lavage e) comprend au moins trois étapes de lavage dans n'importe quel ordre, qui sont

(i) une étape de lavage avec du $TiCl_4$ contenant un donneur interne non phtalique,
(ii) au moins une étape de lavage avec un solvant hydrocarboné aromatique contenant un donneur interne non phtalique, et
(iii) une à trois étapes supplémentaires de lavage avec un hydrocarbure aliphatique ou aromatique,

moyennant quoi la quantité totale de donneur interne non phtalique ajouté à l'étape de lavage e) est dans la plage de 10 à 60 % en poids de la quantité totale de donneur interne non phtalique utilisé dans les étapes de préparation de catalyseur a) à e), et moyennant quoi, pour (i), le $TiCl_4$ et le donneur interne non phtalique sont optionnellement mis en contact préalable soit
($i_1$) à 60 à 90°C pendant un temps de contact préalable dans la plage de 5 minutes à 2 heures, soit
($i_2$) à 20 à 50°C pendant un temps de contact préalable dans la plage de 5 minutes à 5 jours,
dans lequel le donneur interne utilisé dans l'étape de lavage e) est le même que le donneur interne utilisé dans les étapes a) ou b),
ou **caractérisé en ce que** l'étape de lavage e) comprend au moins trois étapes de lavage dans n'importe quel ordre, qui sont

(i) une étape de lavage avec du $TiCl_4$ contenant un donneur interne non phtalique,
(ii) au moins une étape de lavage avec un solvant hydrocarboné aromatique contenant optionnellement un donneur interne non phtalique, et
(iii) une à trois étapes supplémentaires de lavage avec un hydrocarbure aliphatique ou aromatique,

moyennant quoi la quantité totale de donneur interne non phtalique ajouté à l'étape de lavage e) est dans la plage de 10 à 60 % en poids de la quantité totale de donneur interne non phtalique utilisé dans les étapes de préparation de catalyseur a) à e), et moyennant quoi, pour (i), le $TiCl_4$ et le donneur interne non phtalique sont optionnellement mis en contact préalable soit
($i_1$) à 60 à 90°C pendant un temps de contact préalable dans la plage de 5 minutes à 2 heures, soit
($i_2$) à 20 à 50°C pendant un temps de contact préalable dans la plage de 5 minutes à 5 jours,
dans lequel le donneur interne utilisé dans l'étape de lavage e) est le même que le donneur interne utilisé dans les étapes a) ou b).

**2.** Procédé selon la revendication 1, dans lequel la fourniture d'une solution d'un composé alcoxy d'un métal du Groupe 2 peut être réalisée soit

$a_1$) par fourniture d'une solution d'au moins un composé alcoxy d'un métal du Groupe 2 (Ax) qui est le produit de la réaction d'un composé d'un métal du Groupe 2 (MC) et d'un alcool monovalent (A) comprenant, en plus du fragment hydroxyle, au moins un fragment éther optionnellement dans un milieu réactionnel liquide organique ; soit

$a_2$) par fourniture d'une solution d'au moins un composé alcoxy d'un métal du Groupe 2 (Ax') qui est le produit de la réaction d'un composé d'un métal du Groupe 2 (MC) et d'un mélange alcoolique de l'alcool monovalent (A) et d'un alcool monovalent (B) de formule ROH, optionnellement dans un milieu réactionnel liquide organique ; soit

$a_3$) par fourniture d'une solution d'un mélange du composé alcoxy d'un métal du Groupe 2 (Ax) et d'un composé alcoxy d'un métal du Groupe 2 (Bx) qui est le produit de la réaction d'un composé d'un métal du Groupe 2 (MC) et de l'alcool monovalent (B), optionnellement dans un milieu réactionnel liquide organique ; soit

$a_4$) par fourniture d'une solution d'un composé alcoxy d'un métal du Groupe 2 de formule $M(OR_1)_n(OR_2)_m X_{2-n-m}$ ou d'un mélange d'alkylates d'éléments du Groupe 2 $M(OR_1)_{n'} X_{2-n'}$ et $M(OR_2)_{m'} X_{2-m'}$, où M est un métal du Groupe 2, X est un halogène, $R_1$ et $R_2$ sont des groupes alkyle différents ayant 2 à 16 atomes de carbone, et $0 < n < 2$, $0 < m < 2$ et $n+m+(2-n-m) = 2$, sous réserve que n et m soient tous deux $\neq 0$, $0 < n' < 2$ et $0 < m' < 2$.

**3.** Procédé selon la revendication 2, dans lequel, dans l'étape a), une solution de a-2) est fournie.

**4.** Procédé selon l'une quelconque des revendications précédentes, dans lequel l'alcool (A) est un monoéther de glycol en $C_2$ à $C_4$, dans lequel le fragment éther comprend de 2 à 18 atomes de carbone, de préférence de 2 à 12 atomes de carbone.

**5.** Procédé selon l'une quelconque des revendications précédentes, dans lequel l'alcool (B) est de formule ROH où R est un résidu alkyle en $C_2$ à $C_{16}$ linéaire ou ramifié.

**6.** Procédé selon l'une quelconque des revendications précédentes, dans lequel ledit métal du Groupe 2 est le magnésium.

**7.** Procédé selon l'une quelconque des revendications précédentes, dans lequel ledit métal de transition est un métal des Groupes 4 à 6, de préférence Ti.

**8.** Procédé selon l'une quelconque des revendications précédentes, dans lequel ledit donneur d'électron interne non phtalique est choisi parmi les malonates, maléates, succinates, citraconates, glutarates, cyclohexène-1,2-dicarboxylates et benzoates, et l'un quelconque de leurs dérivés et/ou mélanges.

**9.** Procédé selon l'une quelconque des revendications précédentes, dans lequel, dans l'étape de lavage e), l'hydrocarbure aromatique est le toluène et l'hydrocarbure aliphatique est choisi parmi l'heptane et le pentane.

**10.** Procédé selon l'une quelconque des revendications précédentes, dans lequel, dans l'étape de lavage e), le donneur interne non phtalique est ajouté uniquement à l'étape de lavage du $TiCl_4$ (i), moyennant quoi la quantité de donneur interne non phtalique ajouté est de préférence dans la plage de 10 à 20 % en poids de la quantité totale de donneur interne non phtalique utilisé dans les étapes de préparation de catalyseur a) à e) .

**11.** Procédé selon l'une quelconque des revendications 1 à 9, dans lequel, dans l'étape de lavage e), l'addition de donneur interne non phtalique est divisée en 2 à 3 étapes de lavage, moyennant quoi la quantité ajoutée de donneur peut être de 35 à 60 % en poids de la quantité totale de donneur utilisé dans les étapes de préparation de catalyseur a) à e), et

(1) moyennant quoi une étape de lavage du toluène est effectuée en premier, et la solution de lavage contient une certaine quantité de donneur interne, qui est ensuite suivie de l'étape de lavage au $TiCl_4$/donneur interne (i), qui est ensuite suivie d'une autre étape de lavage au toluène sans donneur interne, et d'une ou deux autres étapes de lavage avec un hydrocarbure choisi parmi l'heptane et le pentane, et

(2) moyennant quoi une étape de lavage du toluène est effectuée en premier, et la solution de lavage contient une certaine quantité de donneur interne, en second lieu l'étape de lavage au $TiCl_4$/donneur interne est effectuée, qui est ensuite suivie d'une autre étape de lavage au toluène, où la solution de lavage contient aussi une certaine quantité de donneur interne, qui est suivie d'une ou deux autres étapes de lavage avec un hydrocarbure choisi parmi l'heptane et le pentane.

12. Procédé selon la revendication 11, dans lequel la quantité de donneur interne ajouté en (1) peut être divisée en un rapport (% en poids / % en poids) de 0,5/2 à 2/0,5, et de préférence de 1/1, et la quantité de donneur interne ajouté en (2) peut être identique pour chacune des trois étapes, mais peut aussi varier parmi les étapes, comme 1/1/1 ou 1,5/1/1,5 ou 1/1/2.

13. Particules du composant de catalyseur pouvant être obtenues selon l'une quelconque des revendications 1 à 12.

14. Catalyseur de polymérisation d'oléfines comprenant des particules du composant de catalyseur pouvant être obtenues par le procédé de l'une quelconque des revendications 1 à 11 ou des particules du composant de catalyseur selon la revendication 13 et un co-catalyseur, de préférence un co-catalyseur alkyl-aluminium et optionnellement un donneur d'électron externe.

15. Procédé de polymérisation pour produire des polymères d'oléfine, dans lequel de l'éthylène ou du propylène, optionnellement avec des comonomères, choisis parmi les monomères en $C_2$ à $C_{12}$, sont polymérisés en présence du catalyseur selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200155230 A
- EP 713886 A
- EP 856013 A
- WO 200008073 A
- WO 200008074 A
- EP 926165 A
- EP 83074 A
- EP 83073 A
- US 20050176900 A
- WO 03000757 A
- WO 03000754 A
- WO 2004029112 A
- WO 2012007430 A
- WO 2013098149 A
- WO 2013098138 A
- EP 2610271 A
- EP 2610270 A
- EP 2610272 A
- EP 0887379 A
- WO 9212182 A
- WO 2004000899 A
- WO 2004111095 A
- WO 9924478 A
- WO 9924479 A
- WO 0068315 A

**Non-patent literature cited in the description**

- Nomenclature of Inorganic Chemistry. IUPAC, 1989
- *CHEMICAL ABSTRACTS,* 104-76-7
- *CHEMICAL ABSTRACTS,* 5131-66-8
- *CHEMICAL ABSTRACTS,* 1354569-12-2
- *CHEMICAL ABSTRACTS,* 96-10-6